# EUROPEAN PATENT APPLICATION

(11) **EP 4 503 227 A1**
(43) Date of publication of application: **05.02.2025**
(21) Application number: 22933983.3
(22) Date of filing: 29.03.2022
(51) Int. Cl.: H01M 10/0567, H01M 10/0525

(54) **LITHIUM-ION BATTERY AND ELECTRONIC DEVICE**

(71) Applicant: Ningde Amperex Technology Limited, Ningde, Fujian 352100 (CN)
(72) Inventor: WANG, Xiang, Ningde, Fujian 352100 (CN); HAO, Jingmin, Ningde, Fujian 352100 (CN); XIN, Lijun, Ningde, Fujian 352100 (CN); TANG, Chao, Ningde, Fujian 352100 (CN)
(74) Representative: Klunker IP Patentanwälte PartG mbB
(86) International application number: PCT/CN2022/083532
(87) International publication number: WO 2023/184126

(57) **Abstract**

A lithium-ion battery (1) and an electronic apparatus (10) is provided. The lithium-ion battery (1) includes a negative electrode, a positive electrode, a separator, and an electrolyte. The positive electrode includes a positive electrode active material. The separator is arranged between the negative electrode and the positive electrode. The electrolyte includes a cyclic sulfonate ester, where the cyclic sulfonate ester includes 1,3-propane sultone and a compound represented by formula (I) other than 1,3-propane sultone. Based on a mass n of the electrolyte, a percentage of the compound represented by formula (I) is A2%, where A2 ranges from 0.5 to 5. The electrolyte provided in embodiments of this application includes the 1,3-propane sultone and the compound represented by formula (I), where the mass A2 of the compound represented by formula (I) meets 0.5% ≤ A2/n ≤ 5%. The 1,3-propane sultone and the compound represented by formula (I) can work synergistically to produce a dense CEI film layer on a surface of a positive electrode active material, thereby enhancing the protective effect on the positive electrode active material.

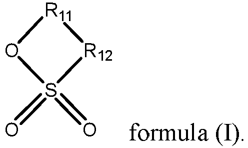

## Description

### TECHNICAL FIELD

This application relates to the field of energy storage technology, and more specifically, to a lithium-ion battery and an electronic apparatus.

### BACKGROUND

Due to the characteristics such as high energy density, high operating voltage, and light weight, lithium-ion batteries are widely used in electronic products such as mobile phones, laptops, and cameras. While improving the electrochemical performance of lithium-ion batteries, their safety performance cannot be ignored. During the use or transportation of lithium-ion batteries, side reactions may occur inside the lithium-ion batteries, thereby generating gaseous by-products, which leads to excessive pressure inside the lithium-ion batteries and causes safety risks of lithium-ion batteries.

Researches have found that the electrolyte can react with the active materials of the positive and negative electrodes at the interface, and the interface has a significant impact on the electrochemical performance and structural stability of the positive and negative electrode materials, and can reduce the gas production to some extent. However, the current electrolyte still lacks protective effects on the positive and negative electrode active materials, especially the positive electrode active materials. Therefore, it is urgent to develop an electrolyte capable of effectively protecting the active materials to improve the safety performance of lithium-ion batteries.

### SUMMARY

This application provides a lithium-ion battery and an electronic apparatus, which can reduce the gas production of the lithium-ion battery, thereby improving the safety performance of the lithium-ion battery.

According to a first aspect, this application provides a lithium-ion battery, where the lithium-ion battery includes a negative electrode, a positive electrode, a separator, and an electrolyte. The positive electrode includes a positive electrode active material. The separator is arranged between the negative electrode and the positive electrode. The electrolyte includes a cyclic sulfonate ester, where the cyclic sulfonate ester includes 1,3-propane sultone and a compound represented by formula (I) other than 1,3-propane sultone, 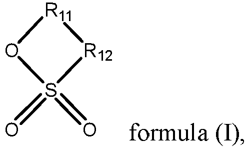 where
in formula (I),
R₁₁ is selected from a substituted or unsubstituted C₁-C₄ alkylene group or a substituted or unsubstituted C₂-C₄ alkenylene group;
R₁₂ is selected from a covalent single bond, a substituted or unsubstituted C₁-C₂ alkyleneoxy group, -O-, or -R₁₃-SO₂-R₁₄-;
R₁₃ is selected from a substituted or unsubstituted C₁-C₂ alkylene group;
R₁₄ is selected from a substituted or unsubstituted C₁-C₂ alkylene group or -O-;
when at least one of Rn, R₁₂, R₁₃, or R₁₄ is substituted, a substituent group is a C₁-C₂₀ alkyl group, a C₆-C₃₀ aryl group, a halogen atom, or -CN; and
based on a mass n of the electrolyte, a percentage of the compound represented by formula (I) is A2%, where A2 ranges from 0.5 to 5.

In some embodiments of this application, the compound represented by formula (I) is a compound represented by formula (I-A) or formula (I-B), 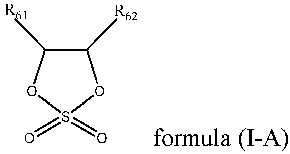 and 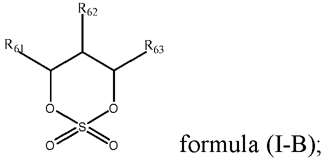 where R₆₁, R6₂, and R₆₃ are each independently selected from a hydrogen atom, a halogen atom, or a C₁-C₂ alkyl group.

In some embodiments of this application, the compound represented by formula (I-A) is any one of compounds represented by formula (I-A1) or formula (I-A4), 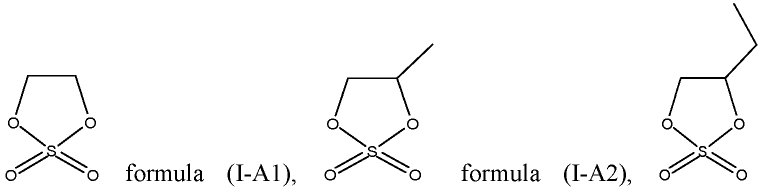 formula (I-A3), and

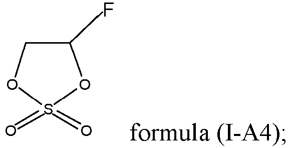

In some embodiments of this application, the compound represented by formula (I-B) is a compound represented by formula (I-B1) or formula (I-B2), 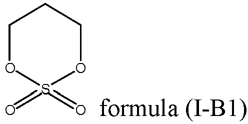 and

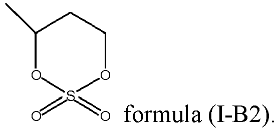

In some embodiments of this application, the compound represented by formula (I) is a compound represented by formula (I-C), formula (I-D) or formula (I-E), 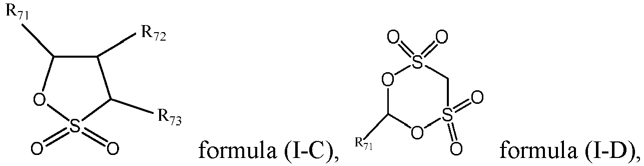 and 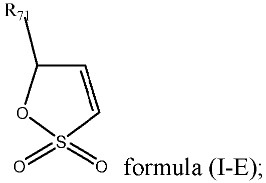 where R₇₁, R₇₂, and R₇₃ are each independently selected from a hydrogen atom, a halogen atom, or a C₁-C₂ alkyl group, and R₇₁, R₇₂, and R₇₃ are not both hydrogen atoms.

In some embodiments of this application, the compound represented by formula (I-C) is any one of compounds represented by formula (I-C1), formula (I-D) or formula (I-C5), 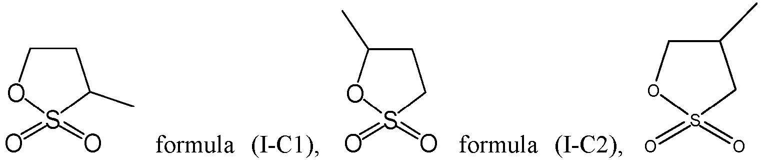 formula (I-C3), 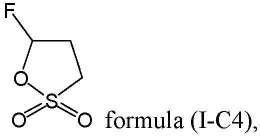 and

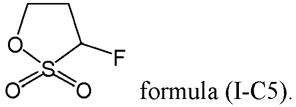

In some embodiments of this application, the compound represented by formula (I-D) is a compound represented by formula (I-D1),

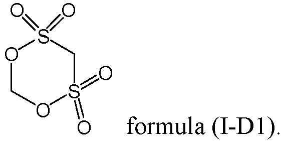

In some embodiments of this application, the compound represented by formula (I-E) is a compound represented by formula (I-E1),

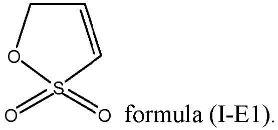

In some embodiments of this application, based on the mass n of the electrolyte, a mass of the 1,3-propane sultone is A1, the mass A1 of the 1,3-propane sultone and the mass A2 of the compound represented by formula (I) meet: 0.5 ≤ A2/A1 ≤ 8.0.

In some embodiments of this application, the mass n of the electrolyte and a mass m of the lithium-ion battery meet: 7% ≤ n/m ≤ 15%; and optionally, 10 ≤ n/m ≤ 15, and based on the mass n of the electrolyte, a mass of the 1,3-propane sultone is A1, and the mass A1 of the 1,3-propane sultone and the mass m of the lithium-ion battery meet: 0.01% ≤ A1/m ≤ 0.1%.

In some embodiments of this application, the electrolyte further includes a carboxylate solvent. Based on the mass n of the electrolyte, a mass percentage y of the carboxylate additive meets 5% ≤ y ≤ 60%, and the mass percentage y of the carboxylate additive, the mass A1 of the 1,3-propane sultone, and the mass A2 of the compound represented by formula (I) meet: 0.05 ≤ (A1 + A2)/(n × y) ≤ 0.6; and optionally, 0.1 ≤ (A1 + A2)/(n × y) ≤ 0.3.

In some embodiments of this application, the carboxylate solvent includes one or more of ethyl acetate, propyl acetate, butyl acetate, ethyl propionate, propyl propionate, butyl propionate, ethyl difluoroacetate, and ethyl trifluoroacetate.

In some embodiments of this application, the electrolyte further includes a carbonate additive. The carbonate additive includes fluoroethylene carbonate and/or vinylene carbonate; where based on the mass n of the electrolyte, a mass percentage z of the carbonate additive meets 0.5% ≤ z ≤ 15%, and the mass percentage z of the carbonate additive, the mass A1 of the 1,3-propane sultone, and the mass A2 of the compound represented by formula (I) meet: 0.1 ≤ (A1+A2)/(n×z) ≤ 7; and optionally, 0.2 ≤ (A1+A2)/(n×z) ≤ 1.1.

In some embodiments of this application, the electrolyte further includes a polynitrile additive. The polynitrile additive is used for complexing with cations in the positive electrode active material during charge and discharge of the lithium-ion battery. Based on the mass n of the electrolyte, a mass percentage r of the polynitrile additive meets 0.1% ≤ r ≤ 12%; and optionally, 0.5% ≤ r ≤ 8%.

The polynitrile additive for the lithium-ion battery includes one or more of the compounds represented by formula (II-1) to formula (II-4), 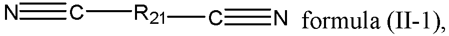 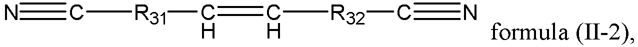 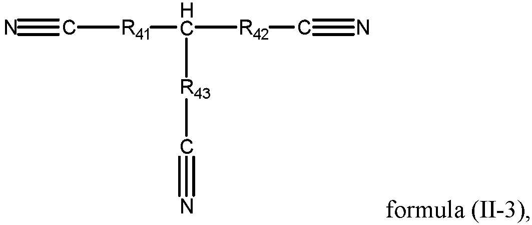 and 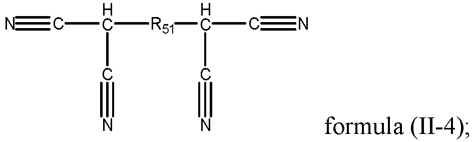 where
in formula (II-1) to formula (II-4),
R₂₁ is selected from a substituted or unsubstituted C₁-C₁₂ alkylene group or a substituted or unsubstituted C₁-C₁₂ alkyleneoxy group;
R₃₁ and R₃₂ each are independently selected from a covalent single bond or a substituted or unsubstituted C₁-C₁₂ alkylene group;
R₄₁, R₄₂, and R₄₃ are each independently selected from a covalent single bond, a substituted or unsubstituted C₁-C₁₂ alkylene group, or a substituted or unsubstituted C₁-C₁₂ alkyleneoxy group; and
R₅₁ is selected from a substituted or unsubstituted C₁-C₁₂ alkylene group, a substituted or unsubstituted C₂-C₁₂ alkenylene group, a substituted or unsubstituted C₆-C₂₆ arylene group, or a substituted or unsubstituted C₂-C₁₂ heterocyclic group;
where when at least one of R₂₁, R₃₁, R₃₂, R₄₁, R₄₂, R₄₃, and R₅₁ is substituted, a substituent group is a halogen atom.

In some embodiments of this application, in a winding direction, the negative electrode, separator, and positive electrode are wound to form a wound structure, and the wound structure includes two end portions opposite each other in the winding direction and a middle portion located between the two end portions. The lithium-ion battery further includes a housing and a connection layer, where the electrolyte and the wound structure are arranged in the housing, and the connection layer includes a first surface and a second surface opposite each other in a thickness direction of the connection layer. The first surface connects the middle portion and the end portion close to the housing, and the second surface is connected to the housing.

In some embodiments of this application, the connection layer is a hot-melt adhesive layer or a composite film layer containing a hot-melt adhesive layer.

In some embodiments of this application, the hot-melt adhesive layer is made of one or more of polyolefin, polyolefin copolymer, polyamide, polyurethane, and epoxy resin.

In some embodiments of this application, the polyolefin includes polyethylene and/or polypropylene; the polyolefin copolymer includes one or more of ethylene-propylene copolymer, ethylene-vinyl acetate copolymer, ethylene-vinyl alcohol copolymer, styrene-isoprene-styrene copolymer, styrene-butadiene-styrene copolymer, styrene-(ethylene-butylene)-styrene copolymer, and styrene-(ethylene-propylene)-styrene copolymer.

According to a second aspect, this application provides an electronic apparatus including the lithium-ion battery according to any embodiment of the first aspect of this application.

According to the electrolyte provided in some embodiments of this application, the electrolyte includes 1,3-propane sultone and a compound represented by formula (I). Both of the above compounds can undergo a reduction ring-opening reaction on a surface of the positive electrode active material to stably produce a CEI film layer on the surface of the positive electrode active material, and the film layer can protect the positive electrode active material, thereby reducing the risk of side reactions between the positive electrode active material and other substances in the electrolyte, and thus reducing the risk of generating gaseous by-products during side reactions. Additionally, the mass A2 of the compound represented by formula (I) meets 0.5% ≤ A2/n ≤ 5%, and the 1,3-propane sultone and the compound represented by formula (I) can work synergistically to produce a dense CEI film layer on the surface of the positive electrode active material, thereby further enhancing the protective effect on the positive electrode active material.

### BRIEF DESCRIPTION OF DRAWINGS

To describe embodiments of this application, the following briefly describes the accompanying drawings required for describing these embodiments of this application or the prior art. Apparently, the accompanying drawings described below are merely some embodiments of this application. Persons skilled in the art may still derive drawings for other embodiments from structures shown in these accompanying drawings without creative efforts.
FIG. 1 is a schematic structural diagram of a lithium-ion battery according to some embodiments of this application;
FIG. 2 is a schematic diagram of a combination structure of a wound structure and a connection layer of the lithium-ion battery shown in FIG. 1; and
FIG. 3 is a schematic structural diagram of an electronic apparatus according to some embodiments of this application.

The accompanying drawings are not drawn to scale.

### Reference signs in the figures:

1: lithium-ion battery;
11. connection layer;
12. housing;
13. wound structure; 131. end portion; 132. middle portion;
10. electronic apparatus.

### DESCRIPTION OF EMBODIMENTS

Some embodiments of this application are described in detail below. Same or similar components and components with same or similar functions are denoted with similar reference signs throughout this specification of this application. Embodiments in related accompanying drawings described herein are descriptive and illustrative, and are used to provide a basic understanding of this application. Some embodiments of this application should not be construed as limitations on this application.

In addition, quantities, ratios, and other values are sometimes presented in the format of range in this specification. It should be understood that such range formats are used for convenience and simplicity and should be flexibly understood as including not only values clearly designated as falling within the range but also all individual values or sub-ranges covered by the range as if each value and sub-range are clearly designated.

In specific embodiments and claims, a list of items connected by the terms "one or more of", "one or more pieces of", "one or more kinds of" or other similar terms may mean any combination of the listed items. For example, if items A and B are listed, the phrase "at least one of A or B" means only A; only B; or both A and B. In another example, if items A, B, and C are listed, the phrase "at least one of A, B, or C" means only A; only B; only C; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

The term "alkyl group" covers linear and branched alkyl groups. For example, the alkyl group may be a C₁-C₅₀ alkyl group, a C₁-C₄₀ alkyl group, a C₁-C₃₀ alkyl group, a C₁-C₂₀ alkyl group, a C₁-C₁₂ alkyl group, a C₁-C₁₀ alkyl group, a C₁-C₆ alkyl group, or a C₁-C₄ alkyl group. In some embodiments, the alkyl group includes a methyl group, an ethyl group, a propyl group, an isopropyl group, a butyl group, an isobutyl group, a tert-butyl group, a pentyl group, a hexyl group, a heptyl group, an octyl group, and the like. In addition, the alkyl group may be arbitrarily substituted.

The term "alkylene group" means a group formed by losing two hydrogen atoms from the same carbon of an alkane or by losing one hydrogen atom each from two different carbons of an alkane. For example, the alkylene group may be a C₁-C₅₀ alkylene group, a C₁-C₄₀ alkylene group, a C₁-C₃₀ alkylene group, a C₁-C₂₀ alkylene group, a C₁-C₁₂ alkylene group, a C₁-C₁₀ alkylene group, a C₁-C₆ alkylene group, or a C₁-C₄ alkylene group. In some embodiments, the alkylene group includes methylene-CH₂-, ethylene, 1,2-ethylene, propylene, 1,2-propylene, butylene, 1,2-butylene, 1,3-butylene, 1,4-butylene, pentylene, 1,2-pentylene, and the like. In addition, the alkylene group may be arbitrarily substituted.

The term "alkenyl group" covers linear and branched alkenyl groups. For example, the alkenyl group may be a C₂-C₅₀ alkenyl group, a C₂-C₄₀ alkenyl group, a C₂-C₃₀ alkenyl group, a C₂-C₂₀ alkenyl group, a C₂-C₁₂ alkenyl group, a C₂-C₁₀ alkenyl group, a C₂-C₆ alkenyl group, a C₂-C₆ alkenyl group, or a C₂-C₄ alkenyl group. In some embodiments, the alkenyl group includes a vinyl group, an allyl group, a butenyl group, a pentenyl group, a hexenyl group, a heptenyl group, and an octenyl group. In addition, the alkenyl group may be arbitrarily substituted.

The term "alkenylene group" means a group formed by losing a hydrogen atom from a carbon of an alkene. For example, the alkenylene group may be a C₂-C₅₀ alkenylene group, a C₂-C₄₀ alkenylene group, a C₂-C₃₀ alkenylene group, a C₂-C₂₀ alkenylene group, a C₂-C₁₂ alkenylene group, a C₂-C₁₀ alkenylene group, a C₂-C₆ alkenylene group, a C₂-C₆ alkenylene group, or a C₂-C₄ alkenylene group. In some embodiments, the alkenylene group includes an ethenylene group, a propenylene group, a butenylene group, a pentenylene group, a hexenylene group, a heptenylene group, and an octenylene group. In addition, the alkenylene group may be arbitrarily substituted.

The term "alkyleneoxy group" is composed of an alkyl group with a hydrogen atom lost and an oxygen atom. For example, the alkyleneoxy group may be a C₁-C₅₀ alkyleneoxy group, a C₁-C₄₀ alkyleneoxy group, a C₁-C₃₀ alkyleneoxy group, a C₁-C₂₀ alkyleneoxy group, a C₁-C₁₂ alkyleneoxy group, a C₁-C₁₀ alkyleneoxy group, a C₁-C₆ alkyleneoxy group, a C₁-C₄ alkyleneoxy group, or a C₁-C₂ alkyleneoxy group. In some embodiments, the alkyleneoxy group includes a methoxy group, an ethoxy group, and a propoxy group. In addition, the alkyleneoxy group may be arbitrarily substituted.

The term "aryl group" means a closed aromatic ring or ring system. For example, the aryl group may be a C₆-C₅₀ aryl group, a C₆-C₄₀ aryl group, a C₆-C₃₀ aryl group, a C₆-C₂₀ aryl group, or a C₆-C₁₀ aryl group, where the C6-C₃₀ aryl group is a group containing 6 to 30 carbon atoms for forming a ring. In some embodiments, the aryl group includes a phenyl group, a naphthyl group, a phenanthryl group, an anthracyl group, a biphenyl group, a triphenylene group, a pyrenyl group, a spirobifluorenyl group, a perylenyl group, an indenyl group, and an azulyl group.

The term "halogen atom" refers to a fluorine atom, chlorine atom, bromine atom, and the like.

The term "hydrogen" refers to 1H (protium, H), 2H (deuterium, D), or 3H (tritium, T). In some embodiments, "hydrogen" may be 1H (protium, H).

Throughout this specification, the substituent groups of compounds are disclosed in groups or ranges. It is expressly anticipated that such descriptions include every individual sub-combination of members of these groups and ranges. For example, the term "C₁-C₈ alkyl group" is specifically intended to disclose individually C₁, C₂, C₃, C₄, C₅, C₆, C₇, C₈, C₁-C₈, C₁-C₇, C₁-C₆, C₁-C₅, C₁-C₄, C₁-C₃, C₁-C₂, C₂-C₈, C₂-C₇, C₂-C₆, C₂-C₅, C₂-C₄, C₂-C₃, C₃-C₈, C₃-C₇, C₃-C₆, C₃-C₅, C₃-C₄, C₄-C₈, C₄-C₇, C₄-C₆, C₄-C₅, C₅-C₈, C₅-C₇, C₅-C₆, C₆-C₈, C₆-C₇, and C₇-C₈ alkyl groups.

In other examples, it is expressly anticipated that a range of integers from 5 to 40 individually discloses 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40; and it is expressly anticipated that a range of integers from 1 to 20 individually discloses 1, 2, 3, 4, 5, 6, 7, 8, 9, 10, 11, 12, 13, 14, 15, 16, 17, 18, 19, and 20. Accordingly, other groups or ranges may be expressly anticipated.

When the above groups are substituted, a substituent group may be independently selected from an alkyl group, an aryl group, a halogen atom, a cyano group -CN, or a combination thereof.

In high-temperature environments or during charge and discharge cycles, the positive electrode active material contained in the lithium-ion battery may undergo irreversible breakage. After the positive electrode active material breaks, new crystal faces will be exposed. The exposed crystal faces will come into contact with the electrolyte, resulting in side reactions that generate gaseous by-products. These gaseous by-products will increase the internal pressure of the lithium-ion battery, thereby potentially causing safety risks.

In view of this, this application designs the composition of the electrolyte from the perspective of protecting the positive electrode active material. A positive electrode protective additive such as a cyclic sulfonate ester is added to the electrolyte, to produce a positive electrode electrolyte interface (Catheode Electrolyte Interphase, CEI) film on a surface of a positive electrode active material, and an amount of the cyclic sulfonate ester is adjusted to reduce the risk of side reactions between the positive electrode active material and the electrolyte. The technical solutions of this application will be described in detail below.

A first aspect of this application provides a lithium-ion battery.

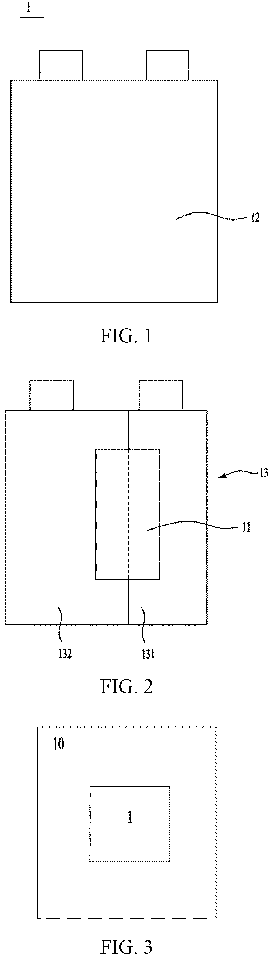

As shown in FIG. 1, the lithium-ion battery 1 includes a negative electrode, a positive electrode, a separator, and an electrolyte. The positive electrode includes a positive electrode active material. The separator is arranged between the negative electrode and the positive electrode. The electrolyte includes a cyclic sulfonate ester, where the cyclic sulfonate ester includes 1,3-propane sultone (PS) and a compound represented by formula (I) other than 1,3-propane sultone, 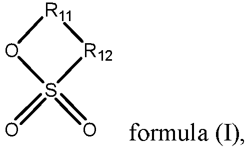 where
in formula (I),
R₁₁ is selected from a substituted or unsubstituted C₁-C₄ alkylene group or a substituted or unsubstituted C₂-C₄ alkenylene group;
R₁₂ is selected from a covalent single bond, a substituted or unsubstituted C₁-C₂ alkyleneoxy group, -O-, or -R₁₃-SO₂-R₁₄-;
R₁₃ is selected from a substituted or unsubstituted C₁-C₂ alkylene group;
R₁₄ is selected from a substituted or unsubstituted C₁-C₂ alkylene group or -O-; and
when at least one of Rn, R₁₂, R₁₃, or R₁₄ is substituted, a substituent group is a C₁-C₂₀ alkyl group, a C₆-C₃₀ aryl group, a halogen atom, or -CN; and
where the cyclic sulfonate ester is used to undergo a reduction ring-opening reaction on the surface of the positive electrode active material during charge and discharge of the lithium-ion battery 1.

Based on a mass n of the electrolyte, a mass A2 of the compound represented by formula (I) meets 0.5% ≤ A2/n ≤ 5%.

According to the electrolyte of this embodiment of this application, the 1,3-propane sultone and the compound represented by formula (I) can both undergo a reduction ring-opening reaction on the surface of the positive electrode active material to stably produce a CEI film layer on the surface of the positive electrode active material, and the film layer can protect the positive electrode active material, thereby reducing the risk of side reactions between the positive electrode active material and other substances in the electrolyte, and thus reducing the risk of generating gaseous by-products during side reactions. Additionally, the mass A2 of the compound represented by formula (I) meets 0.5% ≤ A2/n ≤ 5%, and the 1,3-propane sultone and the compound represented by formula (I) can work synergistically to produce a dense CEI film layer on the surface of the positive electrode active material, thereby further enhancing the protective effect on the positive electrode active material.

In some embodiments, the compound represented by formula (I) may include formula (I-A), 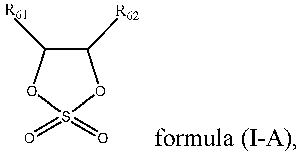 where R₆₁ and R6₂ are each independently selected from a hydrogen atom, a halogen atom, or a C₁-C₂ alkyl group. The halogen atom may be a fluorine atom or a chlorine atom, especially a fluorine atom, which has a relatively high potential and is more conducive to the film-forming reaction.

For example, the compound represented by formula (I-A) is one of compounds represented by formula (I-A1) to formula (I-A4), 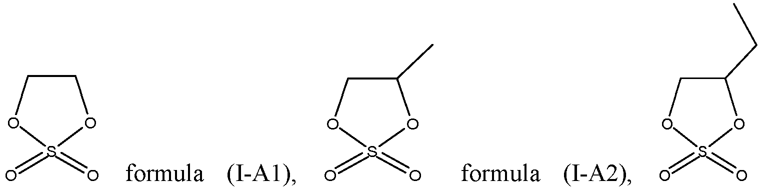 formula (I-A3), and

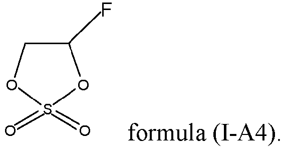

In some other embodiments, the compound represented by formula (I) may include a compound represented by formula (I-B), 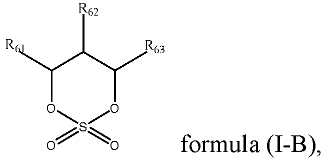 where R₆₁, R6₂, and R₆₃ are each independently selected from a hydrogen atom, a halogen atom, or a C₁-C₂ alkyl group.

For example, the compound represented by formula (I-B) is a compound represented by formula (I-B1) or formula (I-B2),

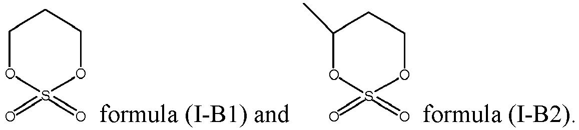

In other embodiments, the compound represented by formula (I) may include a compound represented by formula (I-C), 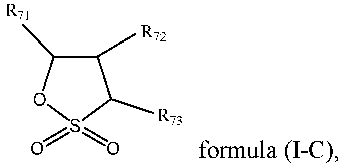 where R₇₁, R₇₂, and R₇₃ are each independently selected from a hydrogen atom, a halogen atom, or a C₁-C₂ alkyl group, and R₇₁, R₇₂, and R₇₃ are not both hydrogen atoms;
For example, the compound represented by formula (I-C) may be one of compounds represented by formula (I-C1) to formula (I-C3), 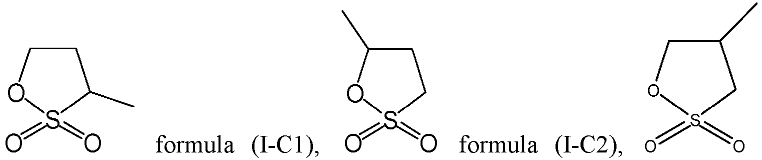 formula (I-C3),

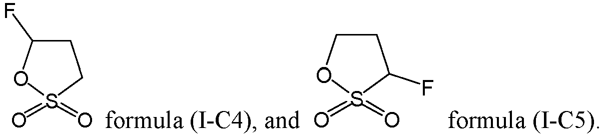

In other embodiments, the compound represented by formula (I) may include a compound represented by formula (I-D), 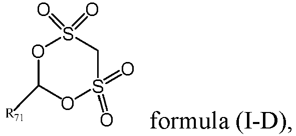 where R₇₁ is selected from a hydrogen atom, a halogen atom, or a C₁-C₂ alkyl group.

For example, the compound represented by formula (I-D) may be a compound represented by formula (I-D1),

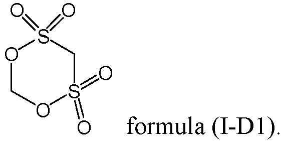

In still some other embodiments, the compound represented by formula (I) may include a compound represented by formula (I-E), 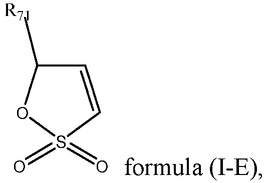 where R₇₁ is selected from a hydrogen atom, a halogen atom, or a C₁-C₂ alkyl group.

For example, the compound represented by formula (I-E) may be a compound represented by formula (I-E1),

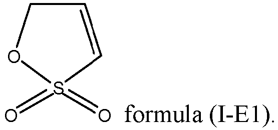

In some embodiments, based on the mass n of the electrolyte, a mass of the 1,3-propane sultone is A1, and the mass of the 1,3-propane sultone and a mass of the compound represented by formula (I) A2 meet: 0.5 ≤ A2/A1 ≤ 8.0; and furthermore, 0.5 ≤ A2/A1 ≤ 8.0. The masses of the 1,3-propane sultone and the compound represented by formula (1) are adjusted to meet the foregoing content range, which can further improve the film-forming stability and the cycling stability of the lithium-ion battery 1. Furthermore, the amount of the 1,3-propane sultone used can be reduced while maintaining the cycling stability of the lithium-ion battery 1.

In some embodiments, the mass n of the electrolyte and a mass m of the lithium-ion battery 1 meet 7% ≤ n/m ≤ 15%; and furthermore, 10 ≤ n/m ≤ 15. Based on the mass n of the electrolyte, the mass of the 1,3-propane sultone is A1, and the mass of the 1,3-propane sultone and the mass of the lithium-ion battery 1 meet 0.01% ≤ A1/m ≤ 0.1%. The mass n of the electrolyte and the mass A1 of the 1,3-propane sultone in the electrolyte are adjusted based on the electrochemical mass m, the film-forming effect of the 1,3-propane sultone on the surface of the positive electrode active material can be improved. Herein, n/m may be used as the electrolyte retention ratio.

To improve the electrochemical performance of the lithium-ion battery 1, in some embodiments, the electrolyte further includes a carboxylate solvent. Based on the mass n of the electrolyte, a mass percentage y of the carboxylate additive meets 5% ≤ y ≤ 60%, and the mass percentage y of the carboxylate additive, the mass of the 1,3-propane sultone A1, and the mass of the compound represented by formula (I) A2 meet: 0.05 ≤ (A1+A2)/(n×y) ≤ 0.6; and furthermore, 0.1 ≤ (A1+A2)/(n×y) ≤ 0.3. During charge and discharge cycle of the lithium-ion battery 1, the carboxylate solvent can ensure the transport of metal ions, thereby improving the cycling performance of the lithium-ion battery 1. Additionally, the amounts of the carboxylate additive, the 1,3-propane sultone, and the compound represented by formula (I) are synergistically regulated within the foregoing ranges, which can further improve the cycling performance of the lithium-ion battery 1.

For example, the carboxylate solvent includes one or more of ethyl acetate, propyl acetate, butyl acetate, ethyl propionate, propyl propionate, butyl propionate, ethyl difluoroacetate, and ethyl trifluoroacetate.

During charge and discharge cycle of the lithium-ion battery 1, the negative electrode active material the lithium-ion battery 1 contains may also undergo side reactions with the electrolyte, reducing the electrochemical performance of the lithium-ion battery 1. To further improve the electrochemical performance of the lithium-ion battery 1, in some embodiments, the electrolyte further includes a carbonate additive. The carbonate additive is used to undergo a polymerization or decomposition reaction during charge and discharge of the lithium-ion battery 1. Based on the mass n of the electrolyte, a mass percentage z of the carbonate additive meets 0.5% ≤ z ≤ 15%, and the mass percentage z of the carbonate additive, the mass A1 of the 1,3-propane sultone, and the mass A2 of the compound represented by formula (I) meet 0.1 ≤ (A1+A2)/(n×z) ≤ 7; and optionally, 0.2 ≤ (A1+A2)/(n×z) ≤ 1.1. During charge and discharge of the lithium-ion battery 1, the carbonate additive can form a solid electrolyte interphase (Solid Electrolyte Interphase, SEI) film on the surface of the negative electrode active material, thereby protecting the negative electrode active material. Additionally, the amounts of the carbonate additive used, the 1,3-propane sultone A1 used, and the compound represented by formula (I) used are synergistically regulated, which can improve the cycling and storage performance of the lithium-ion battery 1.

For example, the carbonate additive includes fluoroethylene carbonate (FEC) and/or vinylene carbonate (VC).

In some embodiments, the electrolyte further includes a polynitrile additive. The polynitrile additive is used for complexing with cations in the positive electrode active material during charge and discharge of the lithium-ion battery 1. Based on the mass n of the electrolyte, a mass percentage r of the polynitrile additive meets 0.1% ≤ r ≤ 12%, and furthermore 0.5% ≤ r ≤ 8%. During charge and discharge of the lithium-ion battery 1, the polynitrile additive can react with the positive electrode active material to produce a film layer on the surface of the positive electrode active material, thereby providing further protection for the positive electrode active material. Additionally, the polynitrile additive is synergistically regulated to meet the foregoing range, which can further improve the cycling performance of the lithium-ion battery 1.

In some embodiments, the positive electrode includes a positive electrode current collector and a positive electrode active material layer. The positive electrode active material layer is arranged on a surface of the positive electrode current collector. The positive electrode current collector may be a commonly used positive electrode current collector in the field, including but not limited to an aluminum foil or a nickel foil. The positive electrode active material layer includes a positive electrode active material. For example, the positive electrode active material includes but is not limited to lithium cobalt oxide, lithium manganese oxide, and lithium nickel oxide, which can be selected according to needs. Lithium ions can be reversibly intercalated into and deintercalated from the positive electrode active material.

To enhance the bonding force of positive electrode active materials, in some embodiments, the positive electrode active material layer may further include a binder to bond adjacent positive electrode active materials and to enhance the bonding force between the positive electrode active material layer and the positive electrode current collector. For example, the binder includes but is not limited to polyvinyl alcohol, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, poly(1,1-difluoroethylene), polyethylene, polypropylene, styrene-butadiene rubber, acrylic (ester) styrene-butadiene rubber, epoxy resin, and nylon.

To improve the conductivity of the positive electrode active material layer, in some embodiments, the positive electrode active material layer may further include a conductive agent. In some embodiments, the conductive agent includes a carbon-based material (for example, natural graphite, artificial graphite, carbon black, acetylene black, Ketjen black, carbon fiber), a metal-based material (for example, metal powder and metal fiber, including copper, nickel, aluminum, silver, and the like), conductive polymer (for example, polyphenylene derivative), and a mixture thereof, so as to improve the conductivity of the positive electrode active material layer.

In some embodiments, the negative electrode includes a negative electrode current collector and a negative electrode active material layer. The negative electrode active material layer is arranged on a surface of the negative electrode current collector. The negative electrode current collector may be a commonly used negative electrode current collector in the field, including but not limited to a copper foil, a nickel foil, or a titanium foil. The negative electrode active material layer includes a negative electrode active material, for example, the negative electrode active material includes but is not limited to a carbon-based material, a silicon-based material, an alloy-based material, and a lithium metal-containing composite oxide material. Non-limiting examples of the carbon-based material include crystalline carbon, amorphous carbon, and a mixture thereof. The crystalline carbon may be amorphous, plate-shaped, flake-shaped, spherical or fiber-shaped natural graphite, or artificial graphite. The amorphous carbon may be soft carbon, hard carbon, mesophase pitch carbon, calcined coke, or the like, which may be selected according to needs. For example, the negative electrode active substance may be selected from at least one of natural graphite, artificial graphite, mesocarbon microbeads (MCMB for short), hard carbon, soft carbon, silicon, a silicon-carbon composite, a Li-Sn alloy, a Li-Sn-O alloy, Sn, SnO, SnO₂, spinel-structure lithiated TiO₂-Li₄Ti₅O₁₂, or a Li-Al alloy. Lithium ions can be reversibly intercalated into and deintercalated from the negative electrode active material.

In some embodiments, in addition to the negative electrode active material, the negative electrode active material layer further includes a binder and a conductive agent. The binder and conductive agent in the negative electrode may use the same materials as those described in the positive electrode active material layer, which will not be repeated herein.

In some embodiments, the separator includes a polymer or an inorganic material produced from materials stable to the electrolyte. The inorganic material may include inorganic ceramic particles. For example, the inorganic ceramic particles may include or be selected from a combination of one or more of alumina, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. For example, the polymer material may include or be selected from one or more of polyamide, polyacrylonitrile, acrylate polymer, polyacrylic acid, polyacrylate, polyvinylpyrrolidone, polyvinyl ether, polyvinylidene fluoride, and poly(vinylidene fluoride-hexafluoropropylene).

The negative electrode, separator, and positive electrode in the lithium-ion battery 1 may have various structural forms, for example, the negative electrode, separator, and positive electrode may be sequentially stacked into a lamination structure, or the negative electrode, separator, and positive electrode may be wound to form a wound structure 13. Specifically, in a winding direction, the negative electrode, separator, and positive electrode are wound to form the wound structure 13, and the wound structure 13 includes two end portions 131 opposite each other in the winding direction and a middle portion 132 located between the two end portions 131.

As shown in FIG. 1 and FIG. 2, in some embodiments, the lithium-ion battery 1 further includes a housing 12 and a connection layer 11. The electrolyte and the wound structure 13 are arranged in the housing 12. The connection layer 11 includes a first surface and a second surface opposite each other in a thickness direction of the connection layer 11. The first surface connects the middle portion 132 and the end portion 131 of the two end portions 131 close to the housing 12, and the second surface is connected to the housing 12. The connection layer 11 connects the middle portion 132 and the end portion 131 of the two end portions 131 close to the housing 12 to fix the wound structure 13, so as to reduce the risk of uncoiling and expansion of the wound structure 13 and reduce the risk of gas accumulation inside the wound structure. The gas can be discharged from the lithium-ion battery 1 in a timely manner, improving the safety performance of the lithium-ion battery 1. Additionally, the connection portion connects the wound structure 13 and the housing 12, which can enhance the connection strength between the wound structure 13 and the housing 12, and reduce the risk of separator shrinkage and slippage of the wound structure 13 after the lithium-ion battery 1 is stored at high temperature and produces gas, thereby improving the structural stability of the lithium-ion battery 1. In addition, the connection layer 11 connects the housing 12 and the wound structure 13, and together with one or more of the cyclic sulfonate ester, carboxylate solvent, carbonate additive, and polynitrile additive added to the electrolyte, can jointly improve the safety performance of the lithium-ion battery 1 during intermittent cycling.

In some examples, the connection layer 11 may be a hot-melt adhesive SIS layer or a composite film layer containing a hot-melt adhesive layer. The composite film layer may be a hot-melt adhesive layer, a metal layer, and a hot-melt adhesive layer sequentially stacked in a thickness direction of the composite film layer; or multiple hot-melt adhesive layers. For example, the hot-melt adhesive layer is made of one or more of polyolefin, polyolefin copolymer, polyamide, polyurethane, and epoxy resin. For example, the polyolefin includes polyethylene and/or polypropylene. For example, the polyolefin copolymer includes one or more of ethylene-propylene copolymer, ethylene-vinyl acetate copolymer, ethylene-vinyl alcohol copolymer, styrene-isoprene-styrene copolymer, styrene-butadiene-styrene copolymer, styrene-(ethylene-butylene)-styrene copolymer, and styrene-(ethylene-propylene)-styrene copolymer. The metal layer may be an aluminum layer, a magnesium layer, or the like.

It should be understood that the lithium-ion battery 1 of this application may include all types of primary or secondary batteries. Specifically, the lithium-ion battery 1 is a lithium secondary battery, including a lithium metal secondary battery, a lithium-ion secondary battery, a lithium polymer secondary battery, or a lithium-ion polymer secondary battery.

The use of the lithium-ion battery 1 of this application is not particularly limited, and it can be used for any known purpose in the prior art.

As shown in FIG. 3, the lithium-ion battery 1 of this application can be used in an electronic apparatus 10. The electronic apparatus 10 includes, but is not limited to, a laptop computer, a pen-input computer, a mobile computer, an electronic book player, a portable phone, a portable fax machine, a portable copier, a portable printer, a head-mounted stereo headset, a video recorder, a liquid crystal display television, a portable cleaner, a portable CD player, a mini optical disk, a transceiver, an electronic notepad, a calculator, a memory card, a portable recorder, a radio, a backup power supply, a motor, a car, a motorcycle, a power-assisted bicycle, a bicycle, a lighting fixture, a toy, a game console, a clock, an electric tool, a flashlight, a camera, a large household battery, and a lithium-ion capacitor.

The technical solutions of this application are further described below using a lithium-ion battery as an example and combining comparative examples and examples, but not limited thereto. Those skilled in the art will understand that the preparation methods described in this application are merely exemplary embodiments. Any modifications or equivalents to the technical solutions of this application should be included in the protection scope of this application without departing from the scope of the technical solutions.

### Examples

### Preparation of lithium-ion battery

The positive electrode active materials in the examples and comparative examples were prepared into full lithium-ion batteries using the following preparation methods.

### (1). Preparation of positive electrode

A positive electrode active material lithium cobalt oxide (LiCoO₂), a conductive agent Super P, and a binder polyvinylidene fluoride were mixed at a weight ratio of 97:1:2, with N-methylpyrrolidone (NMP) added therein. Next, the resulting mixture was stirred to uniformity under the action of a vacuum mixer to obtain a positive electrode slurry. Then, the positive electrode slurry was evenly applied onto a positive electrode current collector aluminum foil. The aluminum foil was dried, followed by cold pressing, cutting, and slitting. Finally, drying was performed in vacuum to obtain a positive electrode plate.

### (2). Preparation of negative electrode

A negative electrode active material artificial graphite, a thickener sodium carboxymethylcellulose (CMC), and a binder styrene-butadiene rubber (SBR) were mixed at a weight ratio of 97:1:2, with deionized water added therein. Next, the resulting mixture was stirred under the action of a vacuum mixer to obtain a negative electrode slurry. Then, the negative electrode slurry was evenly applied onto a negative electrode current collector copper foil. The copper foil was dried, followed by cold pressing, cutting, and slitting. Finally, drying was performed in vacuum to obtain a negative electrode plate.

### (3). Preparation of electrolyte

In a dry argon atmosphere glove box, ethylene carbonate (EC), propylene carbonate (PC), and diethyl carbonate (DEC) were mixed at a mass ratio of 1:3:6, with additives added therein. After dissolving and thoroughly stirring, a lithium salt LiPF₆ was added. The mixture was stirred into uniformity to obtain an electrolyte. A concentration of LiPF₆ was 1.20 mol/L. The specific types and percentages of the additives used in the electrolyte were shown in Tables 1 to 5. wt% was a mass percentage calculated based on a total mass n of the electrolyte.

### 4. Preparation of separator

Boehmite and polyacrylate were mixed, and the resulting mixture was dissolved in deionized water to produce a coating slurry. Next, the coating slurry was evenly applied onto two surfaces of a polyethylene porous substrate using a micro-gravure coating method, and then drying was performed to obtain a separator.

### (5) Preparation of lithium-ion battery

The positive electrode, separator, and negative electrode were stacked in sequence, with the separator arranged between the positive electrode and the negative electrode for separation. The stacked was then wound, and the tabs are welded to the wound structure to obtain a bare cell. The bare cell was placed in an outer packaging foil aluminum-plastic film, with the prepared electrolyte injected therein. After processes such as vacuum packaging, standing, formation, shaping, and capacity testing, a pouch lithium-ion battery was obtained. This battery included neither protection board nor pack packaging.

### Performance test

### (1). Testing method for electrolyte quality

The battery was discharged to 2.8 V at a constant current of 0.1C, and the battery weight was weighed and recorded as m. Next, the battery was disassembled, and the bare cell and outer packaging foil aluminum-plastic film obtained from disassembly were quickly placed in high-purity acetonitrile (purity ≥99.9%) for extraction. The clear liquid obtained by extraction was subjected to gas chromatography test to determine the relative percentage of each component in the electrolyte. The extracted bare cell and outer packaging foil aluminum-plastic film were dried in a vacuum oven, and the total mass was weighed and recorded as m'. The electrolyte mass n was equal to m-m'. An actual mass of each component in the battery was the product of n and a relative percentage of each component. For example, A1 = n × (relative percentage of PS)

### (2). Interval cycle (Interval Cycle, ITC) test of lithium-ion battery

The lithium-ion battery was placed in a 45°C constant temperature chamber and left standing for 30 minutes. Next, the lithium-ion battery was discharged to 3.0 V at a current of 0.5C, charged to 4.5 V at a current of 1C, and left standing for 24 hours. This was one charge and discharge cycle. 50 charge and discharge cycles were performed according to the foregoing procedures. The initial discharge capacity and the discharge capacity after 100 cycles were recorded as C and C', respectively, and the cycling capacity retention rate was calculated using the following formula: (C7C) × 100%.

Moreover, the initial thicknesses of the lithium-ion battery in the examples and comparative examples was measured using a micrometer as η, and the thickness of the lithium-ion battery in the examples and the comparative examples after 50 charge and discharge cycles was measured using a micrometer as η'. The thickness change rate of the lithium-ion battery was calculated using the following formula: (η'/η-1) × 100%.

### (3). High-temperature storage test of lithium-ion battery

The lithium-ion battery was placed in a 25°C room temperature environment, left standing for 5 minutes, charged at 1C to a voltage of 4.5 V, then charged at a constant voltage to 0.05C, and left standing for 30 minutes. The initial thickness η1 of the battery was measured and recorded. The lithium-ion battery was then placed in a 60°C high-temperature oven for storage for 50 days, and the battery thickness was measured as η1' when the test was stopped. The thickness change rate of the lithium-ion battery was calculated using the following formula: (η1'/η1-1) × 100%.

### Performance test results

**Table 1**

| Item | Mass of battery | Mass of electrolyte | Electrolyte retention ratio | Mass of PS | PS proportion in battery cell | 50 ITC cycles at 4.5 V at 45°C | |
|---|---|---|---|---|---|---|---|
| | m (g) | n (g) | n/m (%) | A1 (g) | A1/m | Capacity retention rate | Thickness growth rate |
| Comparative Example 1-1 | 10.1 | 1.0 | 10% | 0.000 | 0 | 43% | 84% |
| Comparative Example 1-2 | 52.7 | 5.3 | 10% | 0.000 | 0 | 42% | 115% |
| Comparative Example 1-3 | 102.4 | 10.2 | 10% | 0.000 | 0 | 38% | 194% |
| Example 1-1 | 9.7 | 1.0 | 10% | 0.008 | 0.08% | 56% | 75% |
| Example 1-2 | 48.8 | 4.9 | 10% | 0.039 | 0.08% | 57% | 87% |
| Example 1-3 | 99.2 | 9.9 | 10% | 0.079 | 0.08% | 52% | 98% |
| Example 1-4 | 52.4 | 2.1 | 4% | 0.042 | 0.08% | 39% | 73% |
| Example 1-5 | 54.6 | 3.8 | 7% | 0.044 | 0.08% | 40% | 78% |
| Example 1-6 | 48.0 | 5.3 | 11% | 0.038 | 0.08% | 60% | 92% |
| Example 1-7 | 49.1 | 6.4 | 13% | 0.039 | 0.08% | 62% | 102% |
| Example 1-8 | 48.5 | 7.3 | 15% | 0.039 | 0.08% | 65% | 115% |
| Example 1-9 | 51.0 | 8.2 | 16% | 0.041 | 0.08% | 63% | 123% |
| Example 1-10 | 49.5 | 7.9 | 16% | 0.050 | 0.10% | 61% | 121% |
| Example 1-11 | 51.6 | 5.2 | 10% | 0.005 | 0.01% | 43% | 109% |
| Example 1-12 | 53.8 | 5.4 | 10% | 0.011 | 0.02% | 49% | 100% |
| Example 1-13 | 52.2 | 5.2 | 10% | 0.031 | 0.06% | 55% | 94% |
| Example 1-14 | 49.3 | 4.9 | 10% | 0.049 | 0.10% | 59% | 84% |
| Example 1-15 | 49.7 | 5.0 | 10% | 0.099 | 0.20% | 63% | 81% |
| Example 1-16 | 10.1 | 0.5 | 5% | 0.008 | 0.08% | 45% | 83% |
| Example 1-17 | 10.7 | 1.6 | 15% | 0.011 | 0.10% | 55% | 72% |
| Example 1-18 | 11.1 | 2.2 | 20% | 0.011 | 0.10% | 40% | 97% |
| Example 1-19 | 97.8 | 4.9 | 5% | 0.098 | 0.10% | 45% | 123% |
| Example 1-20 | 100.2 | 15.0 | 15% | 0.501 | 0.50% | 58% | 104% |
| Example 1-21 | 98.7 | 17.8 | 18% | 0.790 | 0.80% | 34% | 229% |

The performance test results of Table 1 show that the ITC capacity retention rate can be increased and the thickness growth rate can be reduced by adding PS to the electrolyte and controlling the proportion of PS in the lithium-ion battery.

Comparing Examples 1-1 to 1-3 with Comparative Examples 1-1 to 1-3, it shows that the mass the lithium-ion battery has improved. Although the electrolyte retention ratio has not changed, the ITC capacity retention rate and thickness growth rate have significantly deteriorated. This is because the increased mass of the lithium-ion battery enlarges the contact area between the positive and negative active materials and the electrolyte, which has aggravated the consumption reaction of active lithium during the ITC cycle; and when the protection of the positive electrode fails, the number of sites for gas-producing reactions also increases.

Comparing Examples 1-4 to 1-9 with Example 1-2, it shows that as the electrolyte retention ratio n/m increases, the ITC thickness growth is significantly deteriorated, but the ITC capacity retention rate can be improved within an appropriate range, having an optimal value between 7% and 15%. This is because the electrolyte retention ratio increases. Although the mass of PS remains unchanged, the ethylene carbonate solvent and lithium hexafluorophosphate also participate in the film-forming reaction, which can protect the structural stability of the negative electrode material to some extent and increase the capacity retention rate. However, when the positive electrode is not adequately protected, the solvent undergoes decomposition reactions, and the amount of electrolyte increases, which exacerbates gas production and lithium-ion deintercalation reactions. It can be learned from Examples 1-9 and 1-10 that when the electrolyte retention ratio n/m exceeds 15%, even if PS is further added, the effect is not ideal.

Comparing Examples 1-11 to 1-15 with Example 1-2, it shows that PS has a good film-forming effect on both the positive and negative electrodes, but due to regulatory restrictions on the proportion A1/m of PS in the cell with an upper limit of ≤ 0.1%, it is impossible to further increase ITC by adding PS.

Comparing Examples 1-16 to 1-21 with Comparative Examples 1-1 to 1-3, it shows that under different masses of batteries, considering the regulatory restrictions on the proportion, the optimal value of the electrolyte retention ratio may vary with the absolute value of the upper limit of PS used, but it is basically distributed between 7% and 15%.

**Table 2: Synergistic effect of PS and compound represented by formula (I) on ITC**

| Item | Mass of electrolyte | Electrolyte retention ratio | Mass of PS | Compound represented by formula I | | | A2/Al | 50 ITC cycles at 4.5 V at 45°C | |
|---|---|---|---|---|---|---|---|---|---|
| | n (g) | n/m (%) | A1 (g) | Type | A2 (g) | A2/n | | Capacity retention rate | Thickness growth rate |
| Example 1-8 | | | 0.039 | / | / | / | / | 65% | 115% |
| Comparative Example 2-1 | | | / | Formula I-Al | 0.039 | 0.5% | / | 60% | 119% |
| Comparative Example 2-2 | | | | Formula I-C1 | 0.039 | 0.5% | / | 58% | 117% |
| Example 2-1 | | | | Formula I-Al | 0.031 | 0.4% | 0.8 | 67% | 95% |
| Examples 2-2 | | | | | 0.039 | 0.5% | 1.0 | 71% | 88% |
| Examples 2-3 | | | | | 0.116 | 1.6% | 3.0 | 67% | 86% |
| Examples 2 to 4 | | | | | 0.194 | 2.7% | 5.0 | 66% | 103% |
| Examples 2-5 | | | | | 0.271 | 3.7% | 7.0 | 59% | 143% |
| Examples 2-6 | | | | Formula I-C1 | 0.031 | 0.4% | 0.8 | 66% | 98% |
| Examples 2-7 | | | | | 0.039 | 0.5% | 1.0 | 70% | 92% |
| Examples 2-8 | | | | | 0.116 | 1.6% | 3.0 | 72% | 82% |
| Examples 2-9 | 7.3 | | | | 0.194 | 2.7% | 5.0 | 74% | 75% |
| Examples 2-10 | | | | | 0.310 | 4.3% | 8.0 | 68% | 75% |
| Examples 2 to 11 | | | 0.039 | | 0.388 | 53% | 10.0 | 63% | 73% |
| Examples 2-12 | | 15% | | Formula I-El | 0.031 | 0.4% | 0.8 | 61% | 113% |
| Examples 2-13 | | | | | 0.039 | 0.5% | 1.0 | 43% | 109% |
| Examples 2-14 | | | | | 0.116 | 1.6% | 3.0 | 49% | 100% |
| Examples 2-15 | | | | | 0.194 | 2.7% | 5.0 | 55% | 94% |
| Examples 2-16 | | | | Formula I-C3 | 0.031 | 0.4% | 0.8 | 62% | 102% |
| Examples 2-17 | | | | | 0.039 | 0.5% | 1.0 | 66% | 97% |
| Examples 2-18 | | | | | 0.116 | 1.6% | 3.0 | 67% | 85% |
| Examples 2-19 | | | | | 0.194 | 2.7% | 5.0 | 69% | 78% |
| Examples 2-20 | | | | | 0.310 | 4.3% | 8.0 | 64% | 78% |
| Examples 2-21 | | | | | 0.388 | 5.3% | 10.0 | 59% | 77% |
| Example 1-20 | 15.0 | | 0.501 | / | / | / | / | 58% | 104% |
| Comparative Example 2-3 | | | / | Formula I-C1 | 0.501 | 3.3% | / | 55% | 107% |
| Examples 2-22 | | | 0.501 | | 0.080 | 0.5% | 0.2 | 45% | 203% |
| Examples 2 to 23 | | | | | 0.501 | 3.3% | 1.0 | 61% | 94% |
| Examples 2-24 | | | | | 0.751 | 5.0% | 1.5 | 62% | 81% |
| Examples 2-25 | | | | | 1.002 | 6.7% | 2.0 | 54% | 109% |

The performance test results of Table 2 show that both the ITC capacity retention rate and the thickness growth rate can be increased by adding the compound represented by formula (I) into the electrolyte and controlling the percentage of the compound added to 5% ≥ A2/n ≥ 0.5%.

Comparing Comparative Examples 2-1 and 2-2 with Example 1-8, it shows that, as compared to PS, the compound represented by formula (I) can participate in film formation on both the positive and negative electrodes, thereby inhibiting thickness growth.

Comparing Examples 2-1 to 2-21 with Example 1-8, it shows that the combined use of PS and the compound represented by formula (I) can further increase the ITC capacity retention rate and improve the thickness growth rate.

Compared to Examples 1-20 and 2-3, in Examples 2-22 to 2-25, under different battery weights, the optimal value of A2/A1 may change, but it is generally distributed between 0.5 and 8.0.

**Table 3: Synergistic effect of PS, compound represented by formula (I), and carboxylate solvent on ITC**

| Item | Mass of electrolyte | Electrolyte retention ratio | PS | Compound represented by formula I | | Carboxylate solvent | | (A1+A2)/(n×y) | 50 ITC cycles at 4.5 V at 45°C | |
|---|---|---|---|---|---|---|---|---|---|---|
| | n (g) | n/m (%) | A1 (g) | Type | A2 (g) | Type | Percentage (%) | | Capacity retention rate | Thickness growth rate |
| Examples 2-9 | 7.3 | 15% | 0.039 | Formula I-C1 | 0.194 | / | / | / | 74% | 75% |
| Comparative Example 3-1 | 2.1 | 4% | 0.039 | Formula I-C1 | 0.194 | Ethyl propionate | 20% | 0.55 | 65% | 72% |
| Comparative Example 3-2 | 9.2 | 18% | 0.039 | Formula I-C1 | 0.194 | Ethyl propionate | 20% | 0.13 | 75% | 107% |
| Comparative Example 3-3 | 7.3 | 15% | 0.039 | / | / | Ethyl propionate | 20% | / | 58% | 155% |
| Example 3-1 | 7.3 | 15% | 0.039 | Formula I-C1 | 0.194 | Ethyl propionate | 3% | 1.07 | 74% | 73% |
| Example 3-2 | 7.3 | 15% | 0.039 | Formula I-C1 | 0.194 | Ethyl propionate | 5% | 0.64 | 74% | 74% |
| Example 3-3 | 7.3 | 15% | 0.039 | Formula I-C1 | 0.194 | Ethyl propionate | 10% | 0.32 | 76% | 74% |
| Example 3-4 | 7.3 | 15% | 0.039 | Formula I-C1 | 0.194 | Ethyl propionate | 20% | 0.16 | 77% | 75% |
| Example 3-5 | 7.3 | 15% | 0.039 | Formula I-C1 | 0.194 | Ethyl propionate | 50% | 0.06 | 74% | 93% |
| Example 3-6 | 7.3 | 15% | 0.039 | Formula I-C1 | 0.194 | Ethyl propionate | 70% | 0.05 | 66% | 104% |
| Example 3-7 | 7.3 | 15% | 0.039 | Formula I-C1 | 0.194 | Ethyl propionate | 75% | 0.04 | 64% | 164% |
| Example 3-8 | 7.3 | 15% | 0.039 | Formula I-C1 | 0.039 | Ethyl propionate | 30% | 0.04 | 68% | 102% |
| Example 3-9 | 7.3 | 15% | 0.039 | Formula I-C1 | 0.039 | Ethyl propionate | 20% | 0.05 | 70% | 85% |
| Example 3-10 | 7.3 | 15% | 0.039 | Formula I-C1 | 0.039 | Ethyl propionate | 10% | 0.11 | 74% | 92% |
| Example 3-11 | 7.3 | 15% | 0.039 | Formula I-C1 | 0.310 | Ethyl propionate | 50% | 0.10 | 74% | 73% |
| Example 3-12 | 7.3 | 15% | 0.039 | Formula I-C1 | 0.194 | Ethyl acetate | 20% | 0.16 | 73% | 73% |
| Example 3-13 | 7.3 | 15% | 0.039 | Formula I-C1 | 0.194 | Propyl propionate | 20% | 0.16 | 79% | 70% |
| Example 3-14 | 7.3 | 15% | 0.039 | Formula I-C1 | 0.194 | Ethyl difluoroacetate | 20% | 0.16 | 75% | 64% |
| Example 3-15 | 7.3 | 15% | 0.039 | Formula I-C1 | 0.194 | Ethyl acetate + ethyl difluoroacetate | 5% + +15% | 0.16 | 75% | 66% |
| Example 3 to 16 | 7.3 | 15% | 0.039 | Formula I-C1 | 0.194 | Ethyl propionate + ethyl difluoroacetate | 5% + +15% | 0.16 | 77% | 68% |
| Example 3-17 | 15.0 | 15% | 0.501 | Formula I-C2 | 0.310 | Propyl propionate + ethyl difluoroacetate | 5% + +15% | 0.27 | 72% | 64% |
| Examples 3-18 | 15.0 | 15% | 0.501 | Formula I-C3 | 0.310 | Propyl propionate + ethyl difluoroacetate | 4% + +4% | 0.67 | 66% | 80% |

Although Comparative Examples 3-1 and 3-2 are presented as comparative examples herein for ease of comparison with other data in Table 3, it should be noted that Comparative Examples 3-1 and 3-2 still fall within the protection scope of this application.

The performance test results of Table 3 show that the ITC capacity retention rate and thickness growth rate can be increased within a certain range by introducing the carboxylate solvent into the electrolyte and optimizing the amount of carboxylate in combination with PS and the compound represented by formula (I).

Compared to Example 2-9, in Comparative Examples 3-1 and 3-2, introduction of the carboxylate solvent alone may deteriorate the ITC capacity retention rate or thickness growth rate under inappropriate electrolyte retention amount.

Compared to Example 2-9, in Comparative Example 3-3, introduction of the carboxylate without introducing the compound represented by formula (I) significantly deteriorates the ITC capacity retention rate. Because the carboxylate solvent has lower viscosity than the carbonate solvent, an appropriate amount of carboxylates facilitates lithium-ion transport, especially when the electrolyte retention amount is too high, which can reduce the risk of delayed lithium ion deintercalation and deintercalation reactions, accumulation of lithium ions on the active material surface, and irreversible reactions due to high electrolyte viscosity, thus ensuring the capacity retention rate of the battery. However, the carboxylates themselves have insufficient chemical stability at the positive and negative electrodes, and excessive carboxylates accelerate the consumption of active lithium during the repair of SEI and CEI, which indirectly causes solvent decomposition and gas production when protection of the positive electrode fails. Therefore, controlling the percentage of the carboxylate solvent within a reasonable range can reduce the risk of gas production.

Compared to Example 2-9, in Examples 3-4 and Examples 3-12 to 3-16, different carboxylates have different impacts on ITC and thickness growth rate. When compared at equal amounts, propyl propionate has an advantage in capacity retention rate, and ethyl difluoroacetate is superior in thickness growth rate. The ITC performance indicators can be improved in a balanced manner in a diversified carboxylate solvent system (using a mixture of various carboxylate solvents).

Compared to Example 2-9, in Examples 3-1 to 3-18, the carboxylate solvent needs to be combined with PS and the compound represented by formula (I), and the percentage range of the three should be controlled at: 60% ≥ y ≥ 5%, 0.05 ≤ (A1+A2)/(n×y) ≤ 0.6, and preferably 0.1 ≤ (A1+A2)/(n×y) ≤ 0.3. If the percentage of the carboxylate solvent is too low, it cannot provide a smooth lithium-ion transport channel; and if the percentage of the carboxylate solvent is too high, the electrolyte cannot adequately protect the positive electrode, and the solvent is prone to decomposition and consumption.

**Table 4: Synergistic effect of PS, compound represented by formula (I), and additives on ITC**

| Item | Mass of electrolyte | Electrolyte retention ratio | PS | Compound represented by formula I | | Other additives | | | | (A1+A2) /(n×z) | 50 ITC cycles at 4.5 V at 45°C | |
|---|---|---|---|---|---|---|---|---|---|---|---|---|
| | n (g) | n/m (%) | A1 (g) | Type | A2 (g) | Carbonate additive | Percentage z | Polynitrile additive | Percentage | | Capacity retention rate | Thickness growth rate |
| Example 3 to 16 | 7.3 | 15% | 0.039 | Formula I-C1 | 0.194 | / | / | / | / | / | 77% | 68% |
| Example 4-1 | 7.3 | 15% | 0.039 | Formula I-C1 | 0.194 | FEC | 1% | / | / | 3.20 | 78% | 71% |
| Example 4-2 | 7.3 | 15% | 0.039 | Formula I-C 1 | 0.194 | FEC | 5% | / | / | 0.64 | 80% | 95% |
| Example 4-3 | 7.3 | 15% | 0.039 | Formula I-C1 | 0.194 | FEC | 10% | / | / | 0.32 | 77% | 120% |
| Example 4-4 | 7.3 | 15% | 0.039 | Formula I-C 1 | 0.194 | FEC | 15% | / | / | 0.21 | 67% | 159% |
| Example 4-5 | 7.3 | 15% | 0.039 | Formula I-C1 | 0.194 | FEC | 17% | / | / | 0.18 | 56% | 193% |
| Examples 4 to 6 | 7.3 | 15% | 0.039 | Formula I-C1 | 0.194 | VC | 0.5% | / | / | 6.40 | 81% | 83% |
| Example 4-7 | 7.3 | 15% | 0.039 | Formula I-C 1 | 0.194 | VC | 1% | / | / | 3.20 | 83% | 102% |
| Example 4-8 | 7.3 | 15% | 0.039 | Formula I-C 1 | 0.194 | VC | 3% | / | / | 1.07 | 69% | 163% |
| Example 4-9 | 7.3 | 15% | 0.039 | Formula I-C1 | 0.194 | VC | 5% | / | / | 0.64 | 50% | 184% |
| Example 4-10 | 7.3 | 15% | 0.039 | Formula I-C 1 | 0.194 | FEC+VC | 5% + 1% | / | / | 0.53 | 83% | 119% |
| Comparative Example 4-1 | 2.1 | 4% | 0.039 | Formula I-C 1 | 0.194 | FEC+VC | 5% + 1% | / | / | 1.85 | 53% | 91% |
| Comparative Example 4-2 | 9.2 | 18% | 0.039 | Formula I-C 1 | 0.194 | FEC+VC | 5% + 1% | / | / | 0.42 | 71% | 148% |
| Comparative Example 4-3 | 7.3 | 15% | 0.039 | / | / | FEC+VC | 5% + 1% | / | / | 0.09 | 65% | 201% |
| Example 4-11 | 7.3 | 15% | 0.039 | Formula I-C 1 | 0.194 | / | / | 1,3,6-hexanetricarbonitrile | 0.1% | / | 77% | 66% |
| Example 4-12 | 7.3 | 15% | 0.039 | Formula I-C1 | 0.194 | / | / | 1,3,6-hexanetricarbonitrile | 0.5% | / | 78% | 57% |
| Example 4-13 | 7.3 | 15% | 0.039 | Formula I-C 1 | 0.194 | / | / | 1,3,6-hexanetricarbonitrile | 3.0% | / | 81% | 35% |
| Example 4-14 | 7.3 | 15% | 0.039 | Formula I-C1 | 0.194 | / | / | 1,3,6-hexanetricarbonitrile | 5.0% | / | 75% | 30% |
| Example 4-15 | 7.3 | 15% | 0.039 | Formula I-C 1 | 0.194 | / | / | 1,3,6-hexanetricarbonitrile | 8.0% | / | 54% | 27% |
| Example 4-16 | 7.3 | 15% | 0.039 | Formula I-C1 | 0.194 | / | / | 1,3,6-hexanetricarbonitrile | 12.0% | / | 50% | 26% |
| Example 4-17 | 7.3 | 15% | 0.039 | Formula I-C1 | 0.194 | / | / | Glutaronitrile | 0.5% | / | 77% | 67% |
| Examples 4-18 | 7.3 | 15% | 0.039 | Formula I-C 1 | 0.194 | / | / | Glutaronitrile | 3.0% | / | 82% | 42% |
| Example 4-19 | 7.3 | 15% | 0.039 | Formula I-C1 | 0.194 | / | / | Glutaronitrile | 5.0% | / | 84% | 34% |
| Example 4-20 | 7.3 | 15% | 0.039 | Formula I-C1 | 0.194 | / | / | Glutaronitrile | 8.0% | / | 71% | 29% |
| Example 4-21 | 7.3 | 15% | 0.039 | Formula I-C1 | 0.194 | / | / | Adiponitrile | 0.5% | / | 77% | 66% |
| Example 4-22 | 7.3 | 15% | 0.039 | Formula I-C1 | 0.194 | / | / | Adiponitrile | 3.0% | / | 80% | 46% |
| Example 4-23 | 7.3 | 15% | 0.039 | Formula I-C1 | 0.194 | / | / | Adiponitrile | 5.0% | / | 82% | 37% |
| Example 4-24 | 7.3 | 15% | 0.039 | Formula I-C1 | 0.194 | / | / | Adiponitrile | 8.0% | / | 73% | 31% |
| Example 4-25 | 7.3 | 15% | 0.039 | Formula I-C1 | 0.194 | / | / | 1,3,6-pentanetrinitrile + glutaronitrile | 3% + 5% | / | 81% | 28% |
| Example 4-26 | 7.3 | 15% | 0.039 | Formula I-C1 | 0.194 | FEC+VC | 5% + 1% | 1,3,6-pentanetrinitrile + glutaronitrile | 3% + 5% | 0.53 | 87% | 32% |
| Example 4-27 | 7.3 | 15% | 0.039 | Formula I-C1 | 0.194 | FEC+VC | 5.5% + 0.5% | 1,3,6-pentanetrinitrile + glutaronitrile | 3% + 5% | 0.53 | 85% | 30% |
| Example 4-28 | 7.3 | 15% | 0.039 | Formula I-C1 | 0.039 | FEC+VC | 5% + 1% | 1,3,6-pentanetrinitrile + glutaronitrile | 3% + 5% | 0.18 | 80% | 53% |
| Example 4-31 | 7.3 | 15% | 0.039 | Formula I-C1 | 0.310 | FEC+VC | 5% + 1% | 1,3,6-pentanetrinitrile + glutaronitrile | 3% + 5% | 0.80 | 74% | 30% |
| Example 4-32 | 15.0 | 15% | 0.501 | Formula I-C2 | 0.310 | FEC+VC | 5% + 1% | 1,3,6-pentanetrinitrile + glutaronitrile | 3% + 5% | 0.90 | 72% | 72% |
| Example 4-33 | 15.0 | 15% | 0.501 | Formula I-C2 | 0.310 | FEC+VC | 3.5% + 0.5% | 1,3,6-pentanetrinitrile + glutaronitrile | 3% + 5% | 1.35 | 66% | 92% |

Although Comparative Examples 4-1 and 4-2 are presented as comparative examples herein for ease of comparison with other data in Table 4, it should be noted that Comparative Examples 4-1 and 4-2 still fall within the protection scope of this application.

The performance test results of Table 4 show that the ITC capacity retention rate and thickness growth rate can be increased within a certain range by introducing the carbonate additive into the electrolyte and optimizing the amount of the carbonate additive in combination with PS and the compound represented by formula (I). ITC can also be improved by introducing the polynitrile additive into the electrolyte and controlling the amount of the polynitrile additive.

Compared to Example 3-16, in Examples 4-1 to 4-10, film formed on the negative electrode can be repaired by introducing the carbonate additive, and the ITC capacity retention rate can be increased by controlling the percentage of the carbonate additive within the range of 1% to 10%. Different carbonate additives FEC and VC lead to different optimal values. When (A1+A2)/(n×z) ≥ 0.2%, ITC can be increased.

Compared to Comparative Examples 4-1 to 4-3, in Example 4-10, the electrolyte retention ratio, PS, the compound represented by formula (I), and the carbonate additive interact with each other, and by coordinating their percentages, the carbonate additive can repair film formed on the negative electrode, improving the cycling performance of lithium cobalt oxide battery and enhancing both cycling and storage performance.

Compared to Example 3-16, in Examples 4-11 to 4-25, ITC gas produced can be significantly reduced by introducing the polynitrile additive and controlling the percentage of the polynitrile additive within 0.1% to 12%, without affecting the ITC capacity retention rate. Different nitrile additives lead to different optimal values, with a preferred range of 0.5% to 8%. When the percentage of the polynitrile is too low, the positive electrode is not sufficiently protected, resulting in noticeable ITC gas production. When the percentage of the polynitrile is too high, the viscosity of the electrolyte is seriously reduced, causing delayed lithium-ion intercalation and deintercalation reactions and deterioration of the capacity retention rate. When compared at equal amounts, the trinitrile additive reduce ITC gas production more significantly than the dinitrile additive, but excessive amounts cause more severe capacity deterioration.

Compared to Example 3-16, in Examples 4-26 to 4-33, the electrolyte retention ratio, PS, the compound represented by formula (I), the carbonate additive, and the nitrile additive have a performance balance relationship. When the relationship 0.1 ≤ (A1+A2)/(n×z) ≤ 7 is met, under the premise that PS meets regulations, the ITC performance is significantly improved compared to those in the comparative examples in Table 1, with a preferred range of 0.2 ≤ (A1+A2)/(n×z) ≤ 1.1.

**Table 5: Synergistic effect of PS, electrolyte, and adhesive methods on ITC and high-temperature storage**

| Item | Mass of electrolyte | Electrolyte retention ratio | Tail glue | | | 50 ITC cycles at 4.5 V at 45°C | |
|---|---|---|---|---|---|---|---|
| | n (g) | n/m (%) | Negative electrode sealing adhesive | U-shaped wrapping adhesive | SIS hot-melt adhesive | Capacity retention rate | Thickness growth rate |
| Example 4-26 | 7.3 | 15% | √ | × | × | 87% | 32% |
| Example 5-1 | 7.3 | 15% | √ | √ | × | 88% | 29% |
| Example 5-2 | 7.3 | 15% | √ | × | √ | 90% | 22% |
| Example 5-3 | 7.3 | 15% | √ | √ | √ | 91% | 15% |
| Example 5-4 | 15.0 | 15% | √ | × | √ | 79% | 42% |
| Example 5-5 | 15.0 | 15% | √ | √ | √ | 83% | 27% |

In Table 5, the negative electrode sealing adhesive connects the end portion of the two end portions of the negative electrode close to the housing to the middle portion, so as to reduce the risk of uncoiling of the bare cell after winding. The U-shaped wrapping adhesive adheres to the bottom of the wound bare cell so as to reduce the risk of safety accidents caused by the shrinkage of the separator after high-temperature storage testing, resulting in contact between the positive and negative electrodes. The SIS hot-melt adhesive is a double-sided adhesive that serves as a connection layer, bonding the wound bare cell to the housing.

Analyzing the performance test results of Table 5, compared to Example 4-26, in Examples 5-1 to 5-3, the negative electrode sealing adhesive is used, especially in Example 5-3, the SIS hot-melt adhesive is additionally used as a connection layer. The negative electrode sealing adhesive and SIS hot-melt adhesive can reduce the risk of separator shrinkage and bare cell slippage after gas production during high-temperature storage, thereby reducing the risk of more severe swelling, leakage, combustion, and other safety accidents. Additionally, the combination of the above structural design and electrolyte design can jointly improve the safety performance of the battery during intermittent cycling, achieving effects that cannot be obtained by adjusting the additive and solvent of the electrolyte alone.

Compared to Example 4-32, in Examples 5-3 and 5-4, it shows that adjusting electrolyte additives and solvents alone cannot suppress ITC thickness growth in large batteries, but ITC performance can be further improved using U-shaped adhesive and SIS hot-melt adhesive in combination with electrolyte design.

Although illustrative embodiments have been demonstrated and described, persons skilled in the art should understand that the foregoing embodiments cannot be construed as limitations on this application, and that some embodiments may be changed, replaced, and modified without departing from the spirit, principle, and scope of this application.

## Claims

1. A lithium-ion battery, comprising:
a negative electrode;
a positive electrode, comprising a positive electrode active material;
a separator, arranged between the positive electrode and the negative electrode; and
an electrolyte, comprising a cyclic sulfonate ester, wherein the cyclic sulfonate ester comprises 1,3-propane sultone and a compound represented by formula (I) other than 1,3-propane sultone; 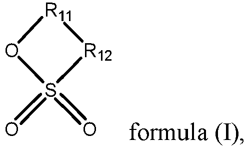 wherein
in formula (I),
R₁₁ is selected from a substituted or unsubstituted C₁-C₄ alkylene group or a substituted or unsubstituted C₂-C₄ alkenylene group;
R₁₂ is selected from a covalent single bond, a substituted or unsubstituted C₁-C₂ alkyleneoxy group, -O-, or -R₁₃-SO₂-R₁₄-;
R₁₃ is selected from a substituted or unsubstituted C₁-C₂ alkylene group; R₁₄ is selected from a substituted or unsubstituted C₁-C₂ alkylene group or -O-; when at least one of R₁₁, R₁₂, R₁₃, or R₁₄ is substituted, a substituent group is a C₁-C₂₀ alkyl group, a C₆-C₃₀ aryl group, a halogen atom, or -CN; and
based on a mass n of the electrolyte, a percentage of the compound represented by formula (I) is A2%, wherein A2 ranges from 0.5 to 5.

2. The lithium-ion battery according to claim 1, wherein
the compound represented by formula (I) is a compound represented by formula (I-A) or formula (I-B); 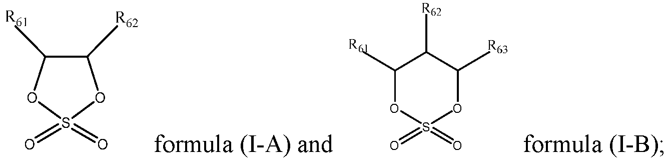
wherein R₆₁, R6₂, and R₆₃ are each independently selected from a hydrogen atom, a halogen atom, or a C₁-C₂ alkyl group;
optionally, the compound represented by formula (I-A) is one of compounds represented by formula (I-A1) to formula (I-A4); 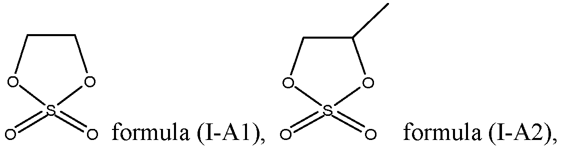 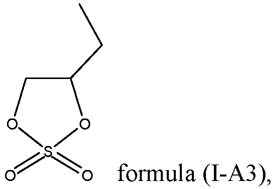 and 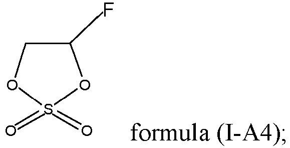
optionally, the compound represented by formula (I-B) is one of compounds represented by formula (I-B1) or formula (I-B2);

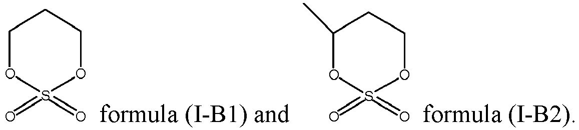

3. The lithium-ion battery according to claim 1, wherein
the compound represented by formula (I) is a compound represented by formula (I-C), formula (I-D), or formula (I-E); 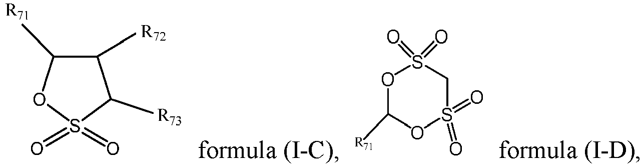 and 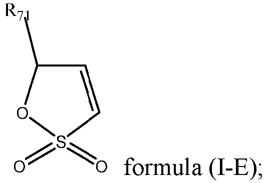
wherein R₇₁, R₇₂, and R₇₃ are each independently selected from a hydrogen atom, a halogen atom, or a C₁-C₂ alkyl group, and R₇₁, R₇₂, and R₇₃ are not both hydrogen atoms;
optionally, the compound represented by formula (I-C) is one of compounds represented by formula (I-C1) to formula (I-C5); 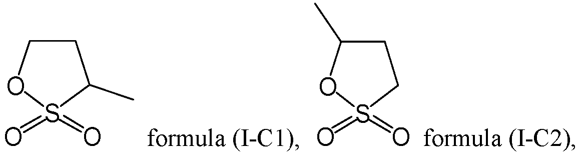 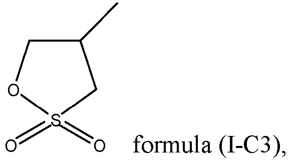 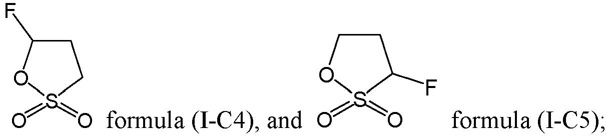
optionally, the compound represented by formula (I-D) is a compound represented by formula (I-D1); 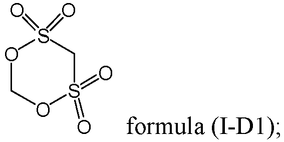 and
optionally, the compound represented by formula (I-E) is a compound represented by formula (I-E1);

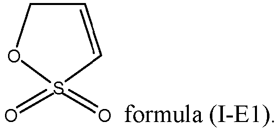

4. The lithium-ion battery according to any one of claims 1 to 3, wherein
based on the mass n of the electrolyte, a mass of the 1,3-propane sultone is A1, and the mass of the 1,3-propane sultone and a mass of the compound represented by formula (I) meet: 0.5 ≤ A2/A1 ≤ 8.0.

5. The lithium-ion battery according to any one of claims 1 to 4, wherein
the mass n of the electrolyte and a mass m of the lithium-ion battery meet: 7% ≤ n/m ≤ 15%; and optionally, 10 ≤ n/m ≤ 15; and
based on the mass n of the electrolyte, the mass of the 1,3-propane sultone is A1, and the mass of the 1,3-propane sultone and the mass of the lithium-ion battery meet: 0.01% ≤ A1/m ≤ 0.1%.

6. The lithium-ion battery according to any one of claims 1 to 5, wherein
the electrolyte further comprises a carboxylate solvent; and
based on the mass n of the electrolyte, a mass percentage y of the carboxylate additive meet 5% ≤ y ≤ 60%, and the mass percentage y of the carboxylate additive, the mass of the 1,3-propane sultone A1, and the mass of the compound represented by formula (I) A2 meet: 0.05 ≤ (A1+A2)/(n×y) ≤ 0.6; and optionally, 0.1 ≤ (A1+A2)/(n×y) ≤ 0.3.

7. The lithium-ion battery according to claim 6, wherein
the carboxylate solvent comprises one or more of ethyl acetate, propyl acetate, butyl acetate, ethyl propionate, propyl propionate, butyl propionate, ethyl difluoroacetate, and ethyl trifluoroacetate.

8. The lithium-ion battery according to any one of claims 1 to 7, wherein the electrolyte further comprises a carbonate additive, and the carbonate additive comprises fluoroethylene carbonate and/or vinylene carbonate; and
based on the mass n of the electrolyte, a mass percentage z of the carbonate additive meet 0.5% ≤ z ≤ 15%, and the mass percentage z of the carbonate additive, the mass of the 1,3-propane sultone A1, and the mass of the compound represented by formula (I) A2 meet: 0.1 ≤ (A1+A2)/(n×z) ≤ 7; and optionally, 0.2 ≤ (A1+A2)/(n×z) ≤ 1.1.

9. The lithium-ion battery according to any one of claims 1 to 8, wherein
the electrolyte further comprises a polynitrile additive, and the polynitrile additive is used for complexing with cations in the positive electrode active material during charge and discharge of the lithium-ion battery;
based on the mass n of the electrolyte, a mass percentage r of the polynitrile additive meets 0.1% ≤ r ≤ 12%; and optionally, 0.5% ≤ r ≤ 8%;
the polynitrile additive comprises one or more of compounds represented by formula (II-1) to formula (II-4); 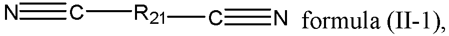 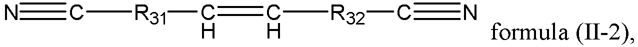 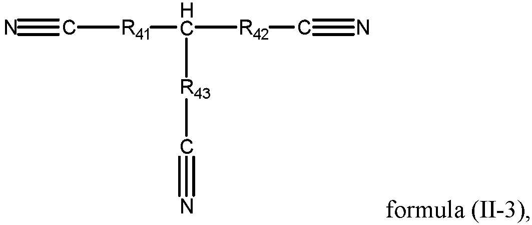 and 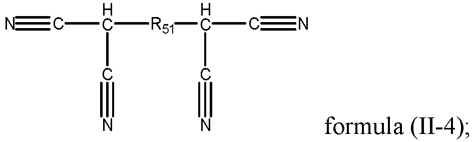 wherein
in formula (II-1) to formula (II-4),
R₂₁ is selected from a substituted or unsubstituted C₁-C₁₂ alkylene group or a substituted or unsubstituted C₁-C₁₂ alkyleneoxy group;
R₃₁ and R₃₂ each are independently selected from a covalent single bond or a substituted or unsubstituted C₁-C₁₂ alkylene group;
R₄₁, R₄₂, and R₄₃ are each independently selected from a covalent single bond, a substituted or unsubstituted C₁-C₁₂ alkylene group, or a substituted or unsubstituted C₁₋C₁₂ alkyleneoxy group; and
R₅₁ is selected from a substituted or unsubstituted C₁-C₁₂ alkylene group, a substituted or unsubstituted C₂-C₁₂ alkenylene group, a substituted or unsubstituted C₆-C₂₆ arylene group, or a substituted or unsubstituted C₂-C₁₂ heterocyclic group;
wherein when at least one of R₂₁, R₃₁, R₃₂, R₄₁, R₄₂, R₄₃, and R₅₁ is substituted, a substituent group is a halogen atom.

10. The lithium-ion battery according to any one of claims 1 to 9, wherein
in a winding direction, the negative electrode, the separator, and the positive electrode are wound to form a wound structure, and the wound structure comprises two end portions opposite each other in the winding direction and a middle portion located between the two end portions; and
the lithium-ion battery further comprises a housing and a connection layer, wherein the electrolyte and the wound structure are arranged in the housing, the connection layer comprises a first surface and a second surface opposite each other in a thickness direction of the connection layer, the first surface connects the middle portion and the end portion close to the housing, and the second surface is connected to the housing.

11. The lithium-ion battery according to claim 10, wherein
the connection layer is a hot-melt adhesive layer or a composite film layer containing a hot-melt adhesive layer;
optionally, the hot-melt adhesive layer is made of one or more of polyolefin, polyolefin copolymer, polyamide, polyurethane, and epoxy resin; and
further optionally, the polyolefin comprises polyethylene and/or polypropylene; wherein the polyolefin copolymer comprises one or more of ethylene-propylene copolymer, ethylene-vinyl acetate copolymer, ethylene-vinyl alcohol copolymer, styrene-isoprene-styrene copolymer, styrene-butadiene-styrene copolymer, styrene-(ethylene-butylene)-styrene copolymer, and styrene-(ethylene-propylene)-styrene copolymer.

12. An electronic apparatus, comprising the lithium-ion battery according to any one of claims 1 to 11.
